(19) Europäisches Patentamt
European Patent Office
Office européen des brevets

(11) **EP 2 978 140 B1**

(12) **EUROPÄISCHE PATENTSCHRIFT**

(45) Veröffentlichungstag und Bekanntmachung des Hinweises auf die Patenterteilung:
**15.05.2019  Patentblatt 2019/20**

(51) Int Cl.:
**H04B 1/16** *(2006.01)*

(21) Anmeldenummer: **15168116.0**

(22) Anmeldetag: **19.05.2015**

(54) **VERFAHREN UND VORRICHTUNG ZUM BESTIMMEN EINER FREQUENZABLAGE EINES RADIOSIGNALS UND EMPFANGSEINRICHTUNG**

METHOD AND DEVICE FOR DETERMINING A FREQUENCY SHIFT OF A RADIO SIGNAL AND RECEIVING DEVICE

PROCÉDÉ ET DISPOSITIF DE DÉTERMINATION D'UNE DÉRIVE DE FRÉQUENCE NOMINALE D'UN SIGNAL RADIO ET DISPOSITIF DE RÉCEPTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2014  DE 102014214394**

(43) Veröffentlichungstag der Anmeldung:
**27.01.2016  Patentblatt 2016/04**

(73) Patentinhaber: **ROBERT BOSCH GMBH**
**70442 Stuttgart (DE)**

(72) Erfinder: **Nyenhuis, Detlev**
**31079 Sibbesse (DE)**

(56) Entgegenhaltungen:
**EP-A1- 0 523 779      EP-A2- 1 115 197**
**DE-T2- 60 015 969      DE-T2- 60 127 826**
**US-A- 5 357 544**

EP 2 978 140 B1

**Beschreibung**

Stand der Technik

Die vorliegende Erfindung bezieht sich auf ein Verfahren zum Bestimmen einer Frequenzablage eines Radiosignals, auf eine entsprechende Vorrichtung, auf ein entsprechendes Computerprogramm sowie auf eine Empfangseinrichtung.

Die Druckschrift DE 600 15 969 T2 offenbart eine Methode und einen Apparat zum Bearbeiten eines intermittierenden Pilot-Kanals.

Die Druckschrift EP 1 115 197 A2 offenbart einen digitalen FM-Stereo-Demodulator sowie ein entsprechendes Verfahren.

Die Druckschrift EP 0 523 779 A1 offenbart einen direkten Konversionsempfänger.

Die Druckschrift US 5,357,544 offenbart Geräte, Systeme und Verfahren zur zusammengesetzten Signaldecodierung.

Die Druckschrift DE 601 27 826 T2 offenbart ein Verfahren und eine Vorrichtung für Symboltaktsynchronisierung in einem Mehrträgerempfänger.

Offenbarung der Erfindung

Ein Pilotton ist ein fester Bestandteil eines sogenannten MPX-Signals (MPX = Multiplex).

Vor diesem Hintergrund werden mit dem hier vorgestellten Ansatz ein Verfahren zum Bestimmen einer Frequenzablage eines Pilottons von einer Pilotschwingung einer Empfangseinrichtung für ein Radiosignal, weiterhin eine Vorrichtung, die dieses Verfahren verwendet, ein entsprechendes Computerprogramm sowie eine Empfangseinrichtung gemäß den Hauptansprüchen vorgestellt. Vorteilhafte Ausgestaltungen ergeben sich aus den jeweiligen Unteransprüchen und der nachfolgenden Beschreibung.

Es wird ein Verfahren zum Bestimmen einer Frequenzablage zwischen einem von einem Radiosignal umfassten Pilotton und einer in einer Empfangseinrichtung für das Radiosignal erzeugten Pilotschwingung vorgestellt, wobei das Verfahren die folgenden Schritte umfasst:
Aufbereiten des Pilottons unter Verwendung der Pilotschwingung, um eine Vorzeicheninformation des Pilottons zu isolieren;

Ermitteln der Frequenzablage unter Verwendung der Vorzeicheninformation; und Bereitstellen der Frequenzablage.

Das Radiosignal kann ein über eine drahtlose Übertragungsstrecke übertragenes und von einer Empfangseinrichtung empfangenes Signal darstellen. Die Pilotschwingung kann ein zur Demodulation des Pilottons verwendetes Signal darstellen. Unter der Frequenzablage kann eine Abweichung einer Frequenz der Pilotschwingung von einer Frequenz des Pilottons verstanden werden. Unter einer Vorzeicheninformation kann ein aus dem Pilotton gewonnenes rein binäres Signal verstanden werden.

Das Verfahren umfasst einen Schritt des Anpassens einer Frequenz der Pilotschwingung unter Verwendung der Frequenzablage und der Vorzeicheninformation. Durch das Anpassen der Frequenz kann die Frequenzablage verringert werden. Dadurch kann eine Empfangsqualität der Empfangseinrichtung verbessert werden.

Im Schritt des Anpassens kann zumindest ein zum Erzeugen der Pilotschwingung verwendetes Polynom unter Verwendung der Frequenzablage und der Vorzeicheninformation approximiert werden. Vorteilhafterweise kann eine Form der Pilotschwingung iterativ nachgeführt werden, bis die Frequenzablage einen Minimalwert erreicht.

Zum Aufbereiten des Pilottons kann ein Sinusanteil der Pilotschwingung in den Pilotton multipliziert werden, um ein erstes Basisbandsignal zu erhalten. Ein Cosinusanteil der Pilotschwingung kann in den Pilotton multipliziert werden, um ein zweites Basisbandsignal zu erhalten. Die Vorzeicheninformation kann unter Verwendung der Basisbandsignale isoliert werden. Die Basisbandsignale können durch einen Filter geglättet werden.

Das erste Basisbandsignal und das zweite Basisbandsignal können zu einem Mischsignal zusammengeführt werden. Die Vorzeicheninformation kann durch das Anwenden einer Signumfunktion auf das Mischsignal gewonnen werden.

Die Vorzeicheninformation kann auf einem Signalpfad vor einer Einrichtung zum Anpassen der Frequenz der Pilotschwingung ausgekoppelt werden.

Es kann ferner eine Phasenablage des Pilottons von der Pilotschwingung bestimmt werden. Vorteilhafterweise kann die Phasenablage bereitgestellt werden. Die Phasenablage repräsentiert eine Verschiebung zwischen der Phase des Pilottons und der Phase der Pilotschwingung.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Eine Empfangseinrichtung für ein Radiosignal weist die folgenden Merkmale auf:

eine Bestimmungseinrichtung, die ausgebildet ist, um eine durch das Radiosignal übertragene Signalinformation unter Verwendung einer Pilotschwingung zu bestimmen; und

eine genannte Vorrichtung zum Bestimmen einer Frequenzablage zwischen einem von dem Radiosignal umfassten Pilotton und der Pilotschwingung.

Durch eine Integration der Vorrichtung in die Empfangseinrichtung kann eine Information über die Frequenzablage bestimmt und beispielsweise zur Anpassung einer Frequenz der Pilotschwingung verwendet werden.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Der hier vorgestellte Ansatz wird nachstehend anhand der beigefügten Zeichnungen beispielhaft näher erläutert. Es zeigen:

Fig. 1 ein Blockschaltbild einer Vorrichtung zum Bestimmen einer Frequenzablage eines Pilottons gemäß einem Ausführungsbeispiel der vorliegenden Erfindung;

Fig. 2 einen Signallaufplan einer Vorrichtung zum Bestimmen einer Frequenzablage eines Pilottons gemäß einem Ausführungsbeispiel der vorliegenden Erfindung;

Fig. 3 einen Signallaufplan einer Einrichtung zum Anpassen einer Frequenz einer Pilotschwingung gemäß einem Ausführungsbeispiel der vorliegenden Erfindung;

Fig. 4 eine Darstellung eines ersten Polynoms und eines zweiten Polynoms einer Pilotschwingung gemäß einem Ausführungsbeispiel der vorliegenden Erfindung;

Fig. 5 einen Signallaufplan einer Einrichtung zum Ermitteln einer Frequenzablage gemäß einem Ausführungsbeispiel der vorliegenden Erfindung;

Fig. 6 ein Ablaufdiagramm eines Verfahrens zum Bestimmen einer Frequenzablage eines Pilottons gemäß einem Ausführungsbeispiel der vorliegenden Erfindung; und

Fig. 7 ein Übertragungssystem gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

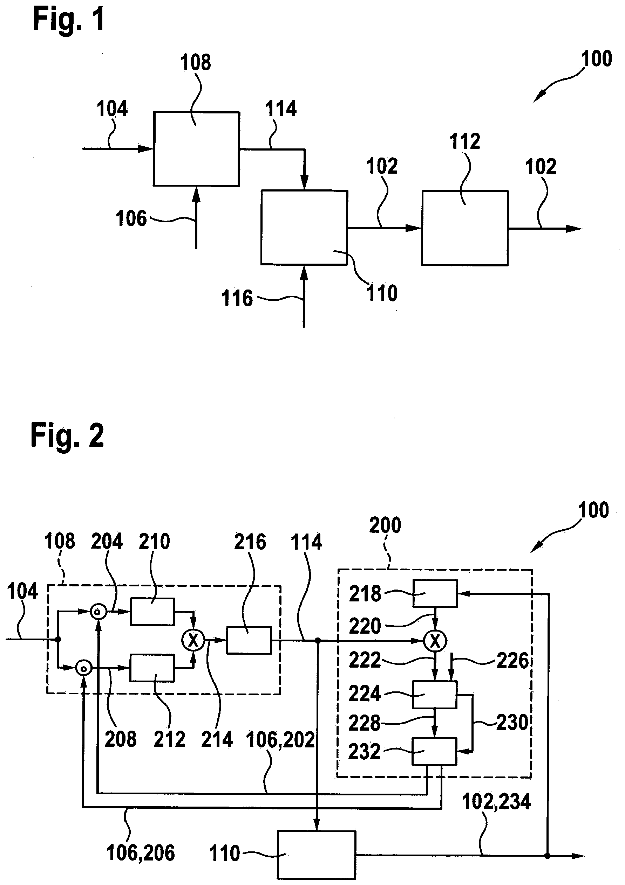

Fig. 1 zeigt ein Blockschaltbild einer Vorrichtung 100 zum Bestimmen einer Frequenzablage 102 eines Pilottons 104 eines Radiosignals gemäß einem Ausführungsbeispiel der vorliegenden Erfindung. Die Frequenzablage 102 repräsentiert dabei eine Frequenzabweichung des Pilottons 104 von einer Pilotschwingung 106 einer Empfangseinrichtung für das Radiosignal. Die Vorrichtung 100 weist eine Einrichtung 108 zum Aufbereiten, eine Einrichtung 110 zum Ermitteln und eine Einrichtung 112 zum Bereitstellen auf. Die Einrichtung 108 zum Aufbereiten ist dazu ausgebildet, den Pilotton 104 unter Verwendung der Pilotschwingung 106 aufzubereiten, um eine Vorzeicheninformation 114 des Pilottons 104 zu generieren. Die Einrichtung 110 zum Ermitteln ist dazu ausgebildet, die Frequenzablage unter Verwendung der Vorzeicheninformation 114 und einer Verarbeitungsvorschrift 116 zu ermitteln. Die Einrichtung 112 zum Bereitstellen ist als eine Schnittstelle 112 der Vorrichtung 100 ausgeführt und dazu ausgebildet, einen die Frequenzablage 102 repräsentierenden Wert bereitzustellen.

Gemäß einem Ausführungsbeispiel ist die Vorrichtung 100 als eine digitale PLL-Schaltung ausgeführt. PLL-Schaltungen und insbesondere digitale Verfahren werden in vielfachen elektronischen Anwendungen eingesetzt. Die Vorrichtung 100, beispielsweise in Form der digitalen PLL-Schaltung, ist gemäß einem Ausführungsbeispiel für die Erzeugung der Pilottonfrequenz der Pilotschwingung 106 mit beispielsweise 19 KHz vorgesehen. Die Schleifenverstärkung und damit die Rauschbandbreite der Pilotschwingung 106 wird über eine intelligente Steuerung der Vorrichtung 100 optimiert. Dadurch kann eine Stereo-Empfindlichkeit beziehungsweise eine Kanaltrennung und eine RDS-Empfindlichkeit (RDS = Radio Data System) beziehungsweise eine RDS-Bit-Erkennung verbessert werden.

Durch den hier vorgestellten Ansatz ergibt sich eine Verbesserung der Stereo/RDS Empfindlichkeit. Insbesondere wird eine Frequenzablage 102 zwischen der Sendefrequenz von 19 KHz im Sender und der im Empfänger erzeugten 19 KHz Schwingung 106 bestimmt oder berechnet.

Fig. 2 zeigt einen Signallaufplan einer Vorrichtung 100 zum Bestimmen einer Frequenzablage 102 eines Pilottons 104 gemäß einem Ausführungsbeispiel der vorliegenden Erfindung. Die Vorrichtung 100 entspricht im Wesentlichen der Vorrichtung in Fig. 1. Die Schnittstelle zum Bereitstellen der Frequenzablage 102 ist nicht explizit dargestellt. Zusätzlich weist die Vorrichtung 100 eine Einrichtung 200 zum Anpassen auf. Die Einrichtung 200 zum Anpassen ist dazu ausgebildet, eine Frequenz der Pilotschwingung 106 unter Verwendung der Frequenzablage 102 anzupassen. Die Vorzeicheninformation 114 wird zwischen der Einrichtung 108 zum Aufbereiten und der Einrichtung 200 zum Anpassen ausgekoppelt. Über die Schnittstelle kann die Frequenzablage 102 beispielsweise auf einer Anzeige beziehungsweise einer Mensch-Maschine-Schnittstelle dargestellt werden.

In der Einrichtung 108 zum Aufbereiten wird der Pilotton 104 auf zwei parallele Äste aufgeteilt. Das erste Basisbandsignal 204 wird in einem ersten Tiefpassfilter 210 gefiltert, um hochfrequente Signalanteile zu entfernen. Das zweite Basisbandsignal 208 wird in einem zweiten Tiefpassfilter 212 gefiltert, um hochfrequente Signalanteile zu entfernen. Die gefilterten Basisbandsignale 204, 208 der beiden Äste werden zu einem Mischsignal 214 multipliziert. Das Mischsignal 214 repräsentiert eine Radioinformation des Pilottons 104. Das Mischsignal 214 wird unter Verwendung einer Vorzeicheneinrichtung 216 in die Vorzeicheninformation 114 umgewandelt. In der Vorzeicheneinrichtung wird eine Signumfunktion auf das Mischsignal 214 angewendet. Die Vorzeicheninformation 114 weist damit lediglich zwei mögliche Werte, plus eins und minus eins, auf.

In der Einrichtung 200 zum Anpassen wird die Frequenzablage 102 in die Vorzeicheninformation 114 eingekoppelt. Dazu wird in einer Ablagekontrolleinrichtung 218, unter Verwendung einer Verarbeitungsvorschrift, aus der Frequenzablage 102 eine Differenzfrequenz Delta 220 bestimmt, die mit der Vorzeicheninformation 114 multipliziert wird, um ein Signal 222 zu erzeugen. Das Signal 222 wird in einem Integrierer 224 unter Verwendung einer Verarbeitungsvorschrift und einer Grundfrequenz 226 der Pilotschwingung 106 integriert, um einen ersten Parameter 228 und einen zweiten Parameter 230 zu erhalten. Aus dem ersten Parameter 228 und dem zweiten Parameter 230 wird in einer Approximationseinrichtung 232 zumindest ein Polynom der Pilotschwingung 106 mit der angepassten Frequenz und/oder Phase approximiert. Unter Verwendung des Polynoms werden der Sinusanteil 202 und der Cosinusanteil 206 der Pilotschwingung 106 bestimmt.

In einem Ausführungsbeispiel wird in der Einrichtung 110 zum Ermitteln eine Frequenzablage 234 des Pilottons 104 von der Pilotschwingung 106 bestimmt. Mit anderen Worten wird ein Phasenversatz zwischen der Pilotschwingung 106 und dem Pilotton ermittelt. Die Frequenzablage 234 wird ebenfalls von der Ablagekontrolleinrichtung 218 verwendet, um die Differenzfrequenz 220 zu bestimmen. Die Frequenzablage 234 definiert damit die Frequenzlage der Differenzfrequenz 220. Über die Parameter 228, 230 wird so die Frequenzlage des Polynoms beeinflusst. Damit können der Sinusanteil 202 und der Cosinusanteil 206 phasenrichtig und frequenzrichtig in den Pilotton 104 eingekoppelt werden.

Gemäß einem Ausführungsbeispiel erfolgt die Berechnung der Frequenzablage 102 zwischen dem Sendesignal in Form des Pilottons 104 und der im Empfänger erzeugten Pilotschwingung 106 von beispielhaft 19 KHz in der in Fig. 2 dargestellten Regelschleife. Dadurch ergibt sich eine Optimierung der Schleifenfilterverstärkung zur Verbesserung des Signal-Rausch-Abstands (SNR).

Gemäß einem Ausführungsbeispiel kann der hier vorgestellte Ansatz als reine Softwarelösung in Quellcode abgebildet werden und kann für Software Based Receiver (SBR) Anwendungen verwendet werden.

Im Folgenden wird anhand der in Fig. 2 dargestellten Übersicht des vorgestellten Ansatzes ein Ausführungsbeispiel der vorliegenden Erfindung detailliert beschrieben. Hinter einem nicht dargestellten FM-Demodulator steht ein Sendesignal in Form eines MPX-Signals (MPX = Multiplex) digitalisiert zur Verfügung. Das MPX-Signal weist Nutzsignale bis mindestens 60 KHz auf. Beispielsweise umfasst das MPX-Signal ein Monosignal bis 15 KHz, in dem der rechte Kanal und der linke Kanal überlagert sind (L+R). Darauf folgt der Pilotton mit Sinus 19 KHz. Von 23 KHz bis 53 KHz liegt das Seitenband, in dem der rechte Kanal vom linken Kanal abgezogen repräsentiert ist (L-R). Bei 57 KHz wird das RDS-Signal mit einer Bandbreite von zwei x 1.1875 KHz gesendet. In Asien gibt es weitere Nutzsignale, wie beispielsweise DARC, die bis 100 KHz gehen. Sollen diese 100 KHz digitalisiert werden, wird als Abtastfrequenz (Samplefrequenz) mindestens Fs = 200 KHz benötigt. Hier ist als beispielsweise Fs = 256 KHz gewählt.

Der im Sender erzeugte Pilotton kann gegenüber der im Empfänger erzeugten Pilotschwingung 106 von 19 KHz eine Frequenzablage 102 von wenigen Hertz und eine Phasenablage 234 aufweisen. Die Phasenablage 234 und die Frequenzablage 102 werden in der hier dargestellten Vorrichtung 100 einer Empfangseinrichtung nachgeregelt, damit das Sendesignal exakt in Frequenz und Phase abgemischt werden kann. Das wird in der hier vorgestellten 19 KHz PLL Schaltung der Vorrichtung 100 beziehungsweise in einem zugehörigen Algorithmus in der Empfangseinrichtung ausgeführt.

Nach Norm darf der Sender auf 19 KHz eine Frequenzabweichung von zwei Hertz aufweisen, die jedoch nicht von allen Sendeanstalten eingehalten wird.

Um diese beispielsweise sechs Hertz zu korrigieren, benötigt ein herkömmlicher 19 KHz Algorithmus eine herkömmliche 19 KHz PLL eine entsprechend große Schrittweite bzw. großes Delta. Dabei ist

$$\text{Delta = 2 x Pi x 6 Hz / Fs, wobei Fs die Samplefrequenz ist (=256000).}$$

Je größer die Frequenzablage ist, desto größer wird Delta und damit steigt die Schleifenverstärkung und die PLL wird breitbandiger und rauscht entsprechend mehr. Damit wird aber das SNR-Verhältnis der erzeugten 19 KHz Schwingung schlechter und damit wird die Kanaltrennung reduziert.

Durch den hier vorgestellten Ansatz wird das Delta 220 so klein wie möglich gehalten bzw. gesteuert.

Dabei wird die Frequenzablage 102 zwischen der Pilottonfrequenz im Sender und der im Empfänger erzeugten Frequenz der Pilotschwingung 106 berechnet. Dieses Ergebnis 102 wird als Frequenzablage 102 bereitgestellt. Aus der Kenntnis der Frequenzablage 102 wird das Delta 220 optimal gesteuert, um das SNR zu maximieren. Da aus diesen 19 KHz auch die 57 KHz für das RDS-Signal erzeugt werden, verbessert sich auch die RDS-Empfindlichkeit.

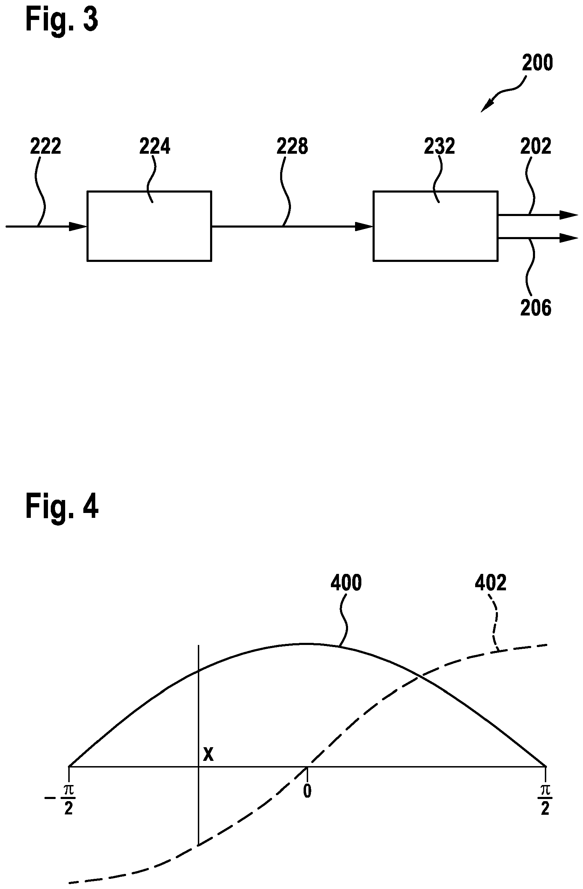

Fig. 3 zeigt einen Signallaufplan einer Einrichtung 200 zum Anpassen einer Frequenz einer Pilotschwingung 106 gemäß einem Ausführungsbeispiel der vorliegenden Erfindung. Die Einrichtung 200 zum Anpassen entspricht im Wesentlichen der Einrichtung zum Anpassen in Fig. 2. Wie in Fig. 2 erhält der Integrierer 224 das Signal 222 im wrap-mode aus der Signuminformation beziehungsweise Vorzeicheninformation multipliziert mit der Differenzfrequenz beziehungsweise dem anhand von Fig. 2 beschriebenen Delta.

$$x = x + p + \text{sgn} \cdot \delta$$
$$if \; x > \pi/2$$
$$x = x - \pi$$
$$vz = -vz$$
$$end$$

und

$$if \left( x < -\pi/2 \right)$$
$$x = x + \pi$$
$$vz = -vz$$
$$end$$

Der Parameter p repräsentiert eine Grundfrequenz und wird in seinem Betrag geregelt.

In der Approximationseinrichtung 232 werden dann zwei Polynome

$$pc(x) = \left( 1 + a_2 x^2 + a_4 x^4 \right) \cdot vz$$

$$ps(x) = \left( a_1 \cdot x + a_3 x^3 + a_5 x^5 \right) \cdot vz$$

approximiert.

vz wird dabei mit "1" initialisiert. $a_1$, ..., $a_5$ sind Koeffizienten. sgn ist gleich $\pm 1$. Der Parameter p bestimmt die Grundfrequenz der Pilotschwingung 202, 206. Der Parameter p wird optimiert.

Das erste Polynom bildet dabei den Cosinusanteil 206 ab, während das zweite Polynom den Sinusanteil 202 abbildet.

Somit werden der Sinusanteil 202 und der Cosinusanteil 206 durch Einsetzen der Parameter 228, 230 in die genannten Polynome bestimmt.

Nicht dargestellt ist die Ablagekontrolleinrichtung $\delta$-Control. Hier wird $\delta = \delta_0$ als Startwert gesetzt. Nach einigen Sekunden, wenn die Berechnung der FrequenzAblage eingeschwungen ist, wird $\delta$ unter Verwendung von

$$\delta = 2\pi \frac{tp - ab}{Fs} = 2\pi \frac{tp - ab}{256000}$$

gesetzt. Der Wert wird alle k Sekunden angepasst, beziehungsweise neu berechnet.

In einem Ausführungsbeispiel werden als Parameter a1 = 1, a2 = -0,49670, a3 = -0,16605, a4 = 0,03705 und a5 = 0,00761 für die Polynome gesetzt. Das MPX-Signal weist als Samplefrequenz Fs beispielsweise 256 KHz auf. p ist die Schrittweite, die sich daraus zu

$$p = 2\pi \frac{19KHz}{256KHz} = 0,23317$$

als Schrittweite für eine 19-KHz-Schwingung ergibt. $\alpha$ als Tiefpassparameter wird beispielsweise mit 0,99 gesetzt.

Für den Startwert $\delta_0$ gilt: $\delta_0 = 2\pi \dfrac{12}{256000} = 0,0002945$

Dies entspricht einer Frequenzabweichung von 12 Hz.

Fig. 4 zeigt eine Darstellung eines ersten Polynoms 400 und eines zweiten Polynoms 402.

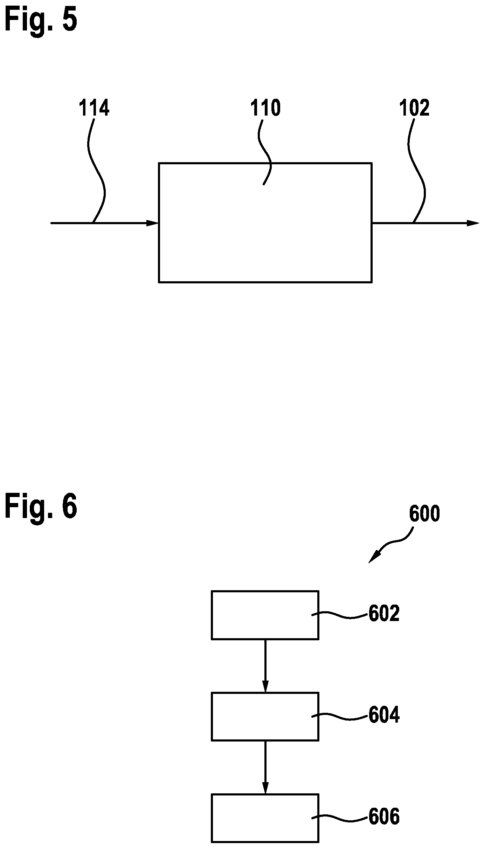

Fig. 5 zeigt einen Signallaufplan einer Einrichtung 110 zum Ermitteln einer Frequenzablage 102 gemäß einem Ausführungsbeispiel der vorliegenden Erfindung. Die Einrichtung 110 zum Anpassen entspricht im Wesentlichen der Einrichtung zum Anpassen in Fig. 1. Wie in Fig. 1 erhält die Einrichtung 110 zum Anpassen als Eingangsgröße die Vorzeicheninformation 114 beziehungsweise Signuminformation. In einem Ausführungsbeispiel wird in der Einrichtung 110 zum Anpassen als Verarbeitungsvorschrift der Code

$$cnt = cnt + 1$$
$$f\_ab = f\_ab + \text{sgn}$$
$$if\ cnt = \eta * 256000$$
$$cnt = 0$$

$$Fablage = \frac{f\_ab \cdot \delta}{2\pi}$$

$$f\_ab = 0$$
$$tp\_ab = \alpha \cdot tp\_ab + (1-\alpha)Fablage$$
$$end$$

umgesetzt. Dabei wird der Zähler cnt auf Fs gesetzt. Die Bedingung zum Rücksetzen des Zählers cnt ergibt sich dabei durch

$$\left( n \cdot Fs \overset{\wedge}{=} \eta\ Sekunden \right)$$

Das Rücksetzen von f_ab erfolgt für die nächsten n Sekunden. Durch die Verarbeitungsvorschrift ergibt sich ein Tiefpass über die gemessenen Frequenzablagen. α ist Parameter, beispielsweise 0,99.

Fig. 6 zeigt ein Ablaufdiagramm eines Verfahrens 600 zum Bestimmen einer Frequenzablage eines Pilottons gemäß einem Ausführungsbeispiel der vorliegenden Erfindung. Das Verfahren 600 weist einen Schritt 602 des Aufbereitens, einen Schritt 604 des Ermittelns und einen Schritt 606 des Bereitstellens auf. Im Schritt 602 des Aufbereitens wird der Pilotton unter Verwendung der Pilotschwingung aufbereitet, um eine Vorzeicheninformation des Pilottons zu isolieren. Im Schritt 604 des Ermittelns wird die Frequenzablage unter Verwendung der Vorzeicheninformation und einer Verarbeitungsvorschrift ermittelt. Im Schritt 606 des Bereitstellens wird die Frequenzablage zur weiteren Verwendung bereitgestellt.

Mit anderen Worten zeigt Fig. 6 ein Ablaufdiagramm eines Verfahrens 600 zur optimalen Stereo-PLL-Steuerung und Berechnung der Frequenzablage.

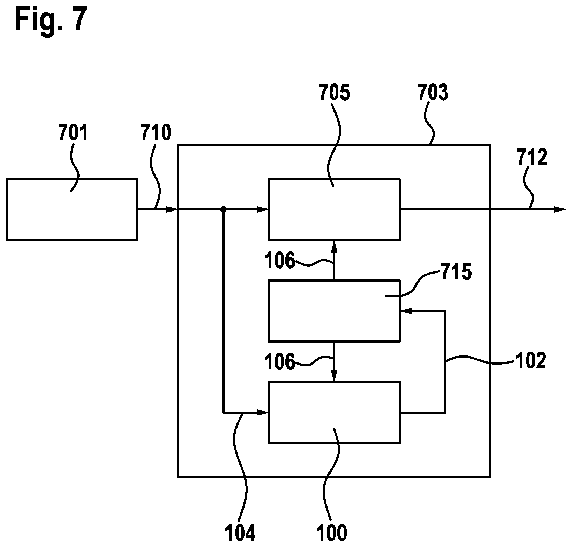

Fig. 7 zeigt ein Übertragungssystem gemäß einem Ausführungsbeispiel der vorliegenden Erfindung. Gezeigt ist eine Sendeeinrichtung 701 und eine Empfangseinrichtung 703. Die Sendeeinrichtung 701 ist ausgebildet, um ein Radiosignal 710 auszusenden. Die Empfangseinrichtung 703 ist ausgebildet, um das Radiosignal 710 zu empfangen, eine in dem Sendesignal 710 enthaltene Signalinformation 712 zu bestimmen und bereitzustellen. Zum Empfangen des Radiosignals 710 weist die Empfangseinrichtung 703 beispielsweise eine Antenne auf.

Die Empfangseinrichtung 703 weist eine Bestimmungseinrichtung 705 auf, die ausgebildet ist, um die Signalinformation 712 unter Verwendung einer Pilotschwingung 106 zu bestimmen. Die Pilotschwingung 106 wird von einer Einrichtung 715 zum Bereitstellen der Pilotschwingung 106 bereitgestellt. Die Empfangseinrichtung 703 weist ferner eine Vorrichtung 100 zum Bestimmen einer Frequenzablage 102 zwischen einem von dem Radiosignal 710 umfassten Pilotton 104 und der Pilotschwingung 106 auf. Die Vorrichtung 100 ist ausgebildet, um eine Information über die Frequenzablage 102 an die Einrichtung 715 zum Bereitstellen der Pilotschwingung 106 auszugeben.

## Patentansprüche

1. Verfahren (600) zum Bestimmen einer Frequenzablage (102) zwischen einem von einem Radiosignal (710) umfassten Pilotton (104) und einer in einer Empfangseinrichtung (703) für das Radiosignal (710) erzeugten Pilotschwingung (106), wobei das Verfahren (600) die folgenden Schritte aufweist:

    Aufbereiten (602) des Pilottons (104) unter Verwendung der Pilotschwingung (106), um eine Vorzeicheninformation (114) des Pilottons (104) zu generieren;
    Ermitteln (604) der Frequenzablage (102) unter Verwendung der Vorzeicheninformation (114); und
    Bereitstellen (606) der Frequenzablage (102),
    **gekennzeichnet durch**
    einen Schritt des Anpassens einer Frequenz der Pilotschwingung (106) unter Verwendung der Frequenzablage (102) und der Vorzeicheninformation (114), um die Pilotschwingung (106) mit einer angepassten Frequenz zu erhalten.

2. Verfahren (600) gemäß Anspruch 1, bei dem im Schritt des Anpassens zumindest ein zum Erzeugen der Pilotschwingung (106) verwendetes Polynom unter Verwendung der Frequenzablage (102) und der Vorzeicheninformation (114) approximiert wird.

3. Verfahren (600) gemäß einem der vorangegangenen Ansprüche, bei dem im Schritt des Aufbereitens ein Sinusanteil (202) der Pilotschwingung (106) in den Pilotton (104) multipliziert wird, um ein erstes Basisbandsignal (204) zu erhalten und ein Cosinusanteil (206) der Pilotschwingung (106) in das Radiosignal (710) multipliziert wird, um ein zweites Basisbandsignal (208) zu erhalten, und die Vorzeicheninformation (114) unter Verwendung der Basisbandsignale (204, 208) generiert wird.

4. Verfahren (600) gemäß Anspruch 3, bei dem im Schritt des Aufbereitens das erste Basisbandsignal (204) und das zweite Basisbandsignal (208) zu einem Mischsignal (214) zusammengeführt werden, und die Vorzeicheninformation (114) durch das Anwenden einer Signumfunktion (216) auf das Mischsignal (214) gewonnen wird.

5. Verfahren (600) gemäß einem der vorangegangenen Ansprüche, bei dem im Schritt (604) des Ermittelns ferner eine Phasenablage (234) des Pilottons (104) von der Pilotschwingung (106) bestimmt wird, wobei im Schritt (606) des Bereitstellens ferner die Phasenablage (234) bereitgestellt wird.

6. Vorrichtung (100) zum Bestimmen einer Frequenzablage (102) zwischen einem von einem Radiosignal (710) umfassten Pilotton (104) und einer in einer Empfangseinrichtung (703) für das Radiosignal (104) erzeugten Pilotschwingung (106), die ausgebildet ist, um alle Schritte eines Verfahrens (600) gemäß einem der vorangegangen Ansprüche durchzuführen.

**7.** Empfangseinrichtung (703) für ein Radiosignal (710), mit folgenden Merkmalen:

eine Bestimmungseinrichtung (705), die ausgebildet ist, um eine durch das Radiosignal (710) übertragene Signalinformation (712) unter Verwendung einer in der Empfangseinrichtung (703) erzeugten Pilotschwingung (106) zu bestimmen; und
eine Vorrichtung (100) gemäß Anspruch 6 zum Bestimmen einer Frequenzablage (102) zwischen einem von dem Radiosignal (710) umfassten Pilotton (104) und der Pilotschwingung (106).

**8.** Computerprogramm, das dazu eingerichtet ist, alle Schritte eines Verfahrens (600) gemäß einem der Ansprüche 1 bis 5 durchzuführen.

**9.** Maschinenlesbares Speichermedium mit einem darauf gespeicherten Computerprogramm nach Anspruch 8.

**Claims**

**1.** Method (600) for determining a frequency offset (102) between a pilot tone (104) that a radio signal (710) comprises and a pilot oscillation (106) generated in a receiving device (703) for the radio signal (710), wherein the method (600) has the following steps:

conditioning (602) the pilot tone (104) by using the pilot oscillation (106) in order to generate arithmetic sign information (114) of the pilot tone (104);
ascertaining (604) the frequency offset (102) by using the arithmetic sign information (114); and
providing (606) the frequency offset (102),
**characterized by**
a step of matching a frequency of the pilot oscillation (106) by using the frequency offset (102) and the arithmetic sign information (114) in order to obtain the pilot oscillation (106) at a matched frequency.

**2.** Method (600) according to Claim 1, in which the matching step involves at least one polynomial used for generating the pilot oscillation (106) being approximated by using the frequency offset (102) and the arithmetic sign information (114).

**3.** Method (600) according to either of the preceding claims, in which the conditioning step involves a sinusoidal component (202) of the pilot oscillation (106) being multiplied into the pilot tone (104) in order to obtain a first baseband signal (204) and a cosine component (206) of the pilot oscillation (106) being multiplied into the radio signal (710) in order to obtain a second baseband signal (208), and the arithmetic sign information (114) being generated by using the baseband signals (204, 208).

**4.** Method (600) according to Claim 3, in which the conditioning step involves the first baseband signal (204) and the second baseband signal (208) being combined to produce a mix signal (214), and the arithmetic sign information (114) being obtained by applying a signum function (216) to the mix signal (214) .

**5.** Method (600) according to one of the preceding claims, in which the ascertaining step (604) further involves a phase offset (234) of the pilot tone (104) from the pilot oscillation (106) being determined, wherein the providing step (606) further involves the phase offset (234) being provided.

**6.** Apparatus (100) for determining a frequency offset (102) between a pilot tone (104) that a radio signal (710) comprises and a pilot oscillation (106) generated in a receiving device (703) for the radio signal (104), which is designed to perform all the steps of a method (600) according to one of the preceding claims.

**7.** Receiving device (703) for a radio signal (710), having the following features:

a determination device (705) designed to determine signal information (712) transmitted by the radio signal (710) by using a pilot oscillation (106) generated in a receiving device (703); and

an apparatus (100) according to Claim 6 for determining a frequency offset (102) between a pilot tone (104) that the radio signal (710) comprises and the pilot oscillation (106).

8. Computer program configured to perform all the steps of a method (600) according to one of Claims 1 to 5.

9. Machine-readable storage medium with a computer program according to Claim 8 stored thereon.

**Revendications**

1. Procédé (600), destiné à déterminer une dérive de fréquence (102) entre un signal pilote (104) compris dans un signal radio (710) et une oscillation pilote (106) créée dans un système récepteur (703) du signal radio (710), le procédé (600) comportant les étapes suivantes, consistant à :

   préparer (602) le signal pilote (104) en utilisant l'oscillation pilote (106), pour générer une information de signe (114) du signal pilote (104) ;
   déterminer (604) la dérive de fréquence (102) en utilisant l'information de signe (114) ; et
   mettre à disposition (606) la dérive de fréquence (102),
   **caractérisé par**
   une étape consistant à adapter une fréquence de l'oscillation pilote (106) en utilisant la dérive de fréquence (102) et l'information de signe (114), pour obtenir l'oscillation pilote (106) avec une fréquence adaptée.

2. Procédé (600) selon la revendication 1, lors duquel dans l'étape de l'adaptation, on met en approximation au moins un polynôme utilisé pour créer l'oscillation pilote (106) en utilisant la dérive de fréquence (102) et l'information de signe (114).

3. Procédé (600) selon l'une quelconque des revendications précédentes, lors duquel dans l'étape de la préparation, on multiplie une fraction sinusoïdale (202) de l'oscillation pilote (106) dans le signal pilote (104), pour obtenir un premier signal de bande de base (204) et on multiplie une fraction cosinusoïdale (206) de l'oscillation pilote (106) dans le signal radio (710), pour obtenir un deuxième signal de bande de base (208) et on génère l'information de signe (114) en utilisant les signaux de bande de base (204, 208).

4. Procédé (600) selon la revendication 3, lors duquel, dans l'étape de la préparation, on réunit le premier signal de bande de base (204) et le deuxième signal de bande de base (208) en un signal mixte (214) et on obtient l'information de signe (114) en appliquant une fonction de signe (216) sur le signal mixte (214).

5. Procédé (600) selon l'une quelconque des revendications précédentes, lors duquel dans l'étape (604) de la détermination, on détermine en outre une dérive de phase (234) du signal pilote (104) de l'oscillation pilote (106), dans l'étape (606) de la mise à disposition, la dérive de phase (234) étant mise à disposition par ailleurs.

6. Dispositif (100), destiné à déterminer une dérive de fréquence (102) entre un signal pilote (104) compris dans un signal radio (710) et une oscillation pilote (106) créée dans un système récepteur (703) du signal radio (104), qui est conçu pour réaliser toutes les étapes d'un procédé (600) selon l'une quelconque des revendications précédentes.

7. Système récepteur (703) d'un signal radio (710), présentant les caractéristiques suivantes :

   un système de détermination (705), qui est conçu pour déterminer une information de signal (712) transmise par le signal radio (710) en utilisant une oscillation pilote (106) créée dans le système récepteur (703) ; et
   un dispositif (100) selon la revendication 6, destiné à déterminer une dérive de fréquence (102) entre un signal pilote (104) compris dans le signal radio (710) et l'oscillation pilote (106).

8. Programme informatique qui est aménagé pour réaliser toutes les étapes d'un procédé (600) selon l'une quelconque des revendications 1 à 5.

9. Support de stockage lisible par informatique, avec un programme informatique selon la revendication 8 qui y est mémorisé.

# Fig. 1

# Fig. 2

**Fig. 3**

200

222    224    228    232    202

206

**Fig. 4**

400    402

X

$-\dfrac{\pi}{2}$    0    $\dfrac{\pi}{2}$

## Fig. 5

114         110         102

## Fig. 6

600

602

604

606

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60015969 T2
- EP 1115197 A2
- EP 0523779 A1
- US 5357544 A
- DE 60127826 T2